(19) Europäisches Patentamt
European Patent Office
Office européen des brevets

(11) **EP 0 870 134 B1**

(12) **EUROPÄISCHE PATENTSCHRIFT**

(45) Veröffentlichungstag und Bekanntmachung des Hinweises auf die Patenterteilung:
**16.08.2001 Patentblatt 2001/33**

(21) Anmeldenummer: **96944664.0**

(22) Anmeldetag: **27.12.1996**

(51) Int Cl.⁷: **F16H 61/38**

(86) Internationale Anmeldenummer:
**PCT/EP96/05849**

(87) Internationale Veröffentlichungsnummer:
**WO 97/25557 (17.07.1997 Gazette 1997/31)**

(54) **VERFAHREN ZUR VORGABE DER ÜBERSETZUNG EINES STUFENLOSEN GETRIEBES**

METHOD OF SETTING THE TRANSMISSION RATIO OF A CONTINUOUSLY VARIABLE GEAR

PROCEDE POUR PREDETERMINER LE RAPPORT DE DEMULTIPLICATION D'UNE TRANSMISSION A VARIATION CONTINUE

(84) Benannte Vertragsstaaten:
**DE ES FR GB IT NL SE**

(30) Priorität: **12.01.1996 DE 19600915**

(43) Veröffentlichungstag der Anmeldung:
**14.10.1998 Patentblatt 1998/42**

(73) Patentinhaber: **ZF-Batavia, L.L.C.**
**Plymouth, Michigan 48170-2456 (US)**

(72) Erfinder:
• **SPEICHER, Patrick**
**D-88094 Oberteuringen (DE)**
• **GILLICH, Udo**
**D-88074 Meckenbeuren (DE)**
• **DANZ, Wolfgang**
**D-88046 Friedrichshafen (DE)**
• **VORNDRAN, Ralf**
**D-88097 Eriskirch (DE)**

(74) Vertreter: **Zietlow, Karl-Peter**
**ZF FRIEDRICHSHAFEN AG**
**88038 Friedrichshafen (DE)**

(56) Entgegenhaltungen:
EP-A- 0 574 968       EP-A- 0 708 275
DE-A- 4 040 502       DE-A- 4 106 471
DE-A- 4 312 415       US-A- 4 945 483
US-A- 5 161 433

• PATENT ABSTRACTS OF JAPAN vol. 018, no. 512 (M-1679), 27.September 1994 & JP 06 174022 A (SUZUKI MOTOR CORP;OTHERS: 01), 21.Juni 1994,

**Beschreibung**

Die Erfindung bezieht sich auf ein Verfahren zur Vorgabe der Übersetzung eines automatischen Getriebes, insbesondere eines stufenlosen Getriebes, mit Mitteln zum Erfassen von Eingangssignalen, die von einem Fahrer-Fahrzeugsystem abgeleitet sind und die mindestens zu einem Ausgangssignal verarbeitet werden, durch das im Rahmen einer Betriebsstrategie eine Vorgabe des Übersetzungsverhältnisses und/oder eine Vorgabe der Drehzahl eines Antriebsmotors und/oder eine Vorgabe Fahrzeugbeschleunigung oder dergleichen herbeigeführt wird.

Die beeinflußbaren Größen unterscheiden sich bei einem stufenlosen Getriebe gegenüber einem Stufenautomatikgetriebe. Die beeinflußbaren Größen beim Stufenautomatikgetriebe bestehen in zwei freien Parametern: dem Zeitpunkt der Schaltung und der Art der Schaltung (Hoch- bzw. Rückschaltung).

Demgegenüber sind bei einem stufenlosen Getriebe drei freie Parameter zu berücksichtigen: ein Startpunkt (zum Beispiel eine Ausgangsdrehzahl oder Ausgangsübersetzung), ein Zielpunkt (zum Beispiel eine Enddrehzahl oder eine gewünschte Übersetzung) sowie der zeitliche Verlauf zwischen dem Start- und Zielpunkt.

Beim Anforderungsprofil einer Fahrstrategie für ein stufenloses Getriebe liegen die Schwerpunkte bei einer guten Fahrbarkeit (Driveability), einem günstigen Verbrauch und einem in der Praxis vertretbaren Applikationsaufwand. Bei der Umsetzung einer Fahrstrategie soll der Ressourcenbedarf gering sein. Die Fahrstrategie soll sich an verschiedene Fahrsituationen (Fahrer, Fahrzeug und Umwelt) automatisch anpassen. Das System soll bei praxisüblichen Abweichungen unempfindlich reagieren, d. h. eine gewisse Robustheit aufweisen.

Innerhalb der Schwerpunkte sind wiederum eine Reihe von Einzelproblemen von besonderer Bedeutung. Bei der Fahrbarkeit gilt es, Anforderungen zu erfüllen, wie:

- gute Relation zwischen Motordrehzahl und Fahrgeschwindigkeit;
- Motordynamik und Fahrleistung entsprechen dem Fahrleistungswunsch;
- Anpassung an die Wünsche des Fahrers;
- manuelle Eingriffsmöglichkeiten durch den Fahrer;
- Anpassung an den Fahrzustand (z. B. Stadt, bergauf);
- Unterstützung der Fahrzeugbremse;
- Integration des Wandlers in die Fahrstrategie;
- sicheres Rückverstellen nach Low beim Anhalten und
- Anpassung an länderspezifische Fahrgewohnheiten.

Hinsichtlich des Ressourcenbedarfs bei der Umsetzung wird:

- wenig EPROM;
- wenig RAM und
- geringer Laufzeitbedarf

gewünscht.

Unter Robustheit der Fahrstrategie sind Eigenschaften zu verstehen, wie:

- Unempfindlichkeit gegenüber Abweichungen der Eingangssignale und
- Unempfindlichkeit bei auftretenden Streuungen der Fahrzeugparameter innerhalb der Fahrzeugreihe eines Herstellers.

Im Abschnitt des Anforderungsprofils, der sich mit dem Verbrauch befaßt, gilt das besondere Augenmerk Forderungen, wie:

- hohe Aufenthaltsdauer in verbrauchsgünstigen Bereichen des Motorkennfeldes. Die Zielvorstellung ist eine hohe Motorleistung bei kleinstmöglichen Drehzahlen;
- Absenkung der Motordrehzahl bei Konstantfahrt und
- Betriebspunktführung im Schub entsprechend der Schubabschaltung des Motors.

Bei der Applikation geht es um die:

- sichere, stetige, für den Fahrer nachvollziehbare Betriebspunktvorgabe in allen Fahrsituationen;
- beliebige Kombination von Eingangsgrößen;
- kurze Applikationszeiten bei hoher Funktionsdichte und
- hohe Flexibilität bei der Berücksichtigung der Wünsche des Fahrzeugherstellers.

Bei der automatischen Anpassung geht es um die:

- Anpassung an die momentane Fahrweise;
- Anpassung an die momentanen Umgebungsbedingungen (bergauf, bergab usw.) und
- Anpassung an den momentanen Fahrzustand (kaltes oder warmes Fahrzeug, Zusatzverbraucher, Anhänger usw.).

Als Konsequenz aus dem Anforderungsprofil an eine Fahrstrategie für ein stufenloses Getriebe lassen sich durch Abstraktion drei übergeordnete Problemstellungen formulieren:

- die Fahrstrategie muß adaptiv sein;
- für die Entwicklung müssen leistungsfähige Entwicklungstools zur Verfügung stehen und
- die Applikation der Fahrstrategie muß EDV-gestützt möglich sein.

Vergleicht man das Anforderungsprofil an eine Fahrstrategie für ein stufenloses Getriebe mit den bekannten Lösungen, gilt trotz der Vielzahl der bekannten Fahrstrategien tendenziell, daß Einzelprobleme gelöst sind, jedoch keine der bekannten Fahrstrategien dem Anwendungsprofil insgesamt gerecht werden kann.

So ist beispielsweise die Vorgabe eines Betriebspunktes unter Berücksichtigung einzelner Eingangsgrößen zufriedenstellend gelöst. Diese Feststellung gilt jedoch nicht hinsichtlich einer beliebigen Kombination von Eingangsgrößen. Die Beschreibung der Zusammenhänge gestaltet sich bei der Komplexität des Anforderungsprofils entsprechend aufwendig, so daß auch aus diesen Gründen eine effiziente Programmierung und Applikation noch nicht möglich ist.

Zur Vorgabe eines Betriebspunktes unter Berücksichtigung einzelner Eingangsgrößen sind elektronisch gesteuerte, kontinuierlich verstellbare Getriebe bekannt, bei denen (fahrerwunschabhängig oder selbsttätig) auf unterschiedlichen Kennlinien des Motorkennfeldes des Motors gefahren werden kann. Der Betrieb erfolgt entweder auf der Kennlinie eines optimalen Verbrauchs oder auf einer Kennlinie optimaler Leistung. Von diesen Kennlinien des Motorkennfeldes sind Schaltkennlinien in Schaltkennfeldern abgeleitet, die eine Verstellung des Getriebes im sogenannten Economy- bzw. Sport-Modus zulassen. Bei der Lösung nach der DE-A 43 12 415 werden diese Kennlinien miteinander zu einem Schaltkennfeld verknüpft, bei dem eine Begrenzungslinie einer Kennlinie eines optimierten Verbrauchs und eine weitere Begrenzungslinie einer Kennlinie optimierter Leistung entspricht. Die zwischen diesen Begrenzungslinien liegenden Betriebspunkte liegen auf sogenannten dynamischen Kennlinien, deren Lage von der Größe der Änderungsgeschwindigkeit der Leistungsanforderung abhängt.

Das Auswahlkriterium des Schaltkennfeldes und der jeweiligen dynamischen Kennlinie, entlang der die Führung des Betriebspunktes erfolgt, ist somit die Änderungsgeschwindigkeit der Drosselklappe des Motors.

In der EP-A 0 657 668 werden adaptive Strategien zur optimalen Anpassung der Schaltkennfelder unterteilt in eine Langzeitstrategie (Fahrertyperkennung), eine mittelfristige Strategie (Fahrumgebung) und eine Kurzzeitstrategie (aktuelle Fahrsituation). In Abhängigkeit vom jeweiligen Fahrzeugtyp (Maximalleistung sowie Abhängigkeit des Fahrwiderstandes von der Fahrgeschwindigkeit bei mittlerer Zuladung) sowie von Verbrauchs- und Sportlichkeitskriterien werden zwei geschwindigkeitsabhängige Leistungs-Grenzkurven als Kennlinien in das P-v-Diagramm eingetragen. Diesen Kennlinien wird eine minimale und eine maximale Bewertungszahl zugeordnet. Die aktuelle Motorleistung wird bestimmt und mit den beiden Grenzkurven verglichen. Durch den Vergleich erhält man eine aktuelle Bewertungszahl, die während der Fahrt permanent ermittelt wird. Die aktuellen Bewertungszahlen werden einer zeitlichen Filterung unterworfen; hierdurch wird eine gefilterte Bewertungszahl gewonnen. Anhand der gefilterten Bewertungszahl werden zweidimensionale Kennlinien bzw. dreidimensionale Kennlinienfelder zur Steuerung der Antriebseinheit ermittelt. Ziel dieses Verfahrens ist, für die Getriebesteuerung nur noch eine modifizierte Langzeitstrategie, und, bei Herausnahme der Schlupferkennung aus der mittelfristigen Strategie, eine Kurzzeitstrategie zu verwenden.

Das bekannte Verfahren ist in Teilaspekten einer Fahrstrategie vorteilhaft, weil die aktuelle Bewertungszahl durch einfache Interpolation aufgefunden werden kann. Das Beeinflussen des Zeitverhaltens über einen geeigneten Filter soll keinen großen Aufwand voraussetzen. Bei dem bekannten Verfahren bleibt hingegen offen, wie andere, nicht minder wichtige Teilaspekte des Anforderungsprofils berücksichtigt werden können.

Um die Entwicklungszeiten zu reduzieren, wird bei der Vorrichtung zum Steuern eines stufenlosen Getriebes nach der DE-A 44 45 325 vorgeschlagen, das Motordrehmoment zu schätzen, um ein Getriebe-Eingangsdrehmoment zu berechnen. Durch Vergleich des berechneten Getriebe-Eingangsdrehmoments mit einem Soll-Antriebswellendrehmoment, das auf den die Motorlast angegebenen Parametern beruht, wird ein Soll-Übersetzungsverhältnis bestimmt. Aus Soll-Antriebswellendrehmoment-Kennfeldern wird ein Soll-Übersetzungsverhältnis entnommen, das mit dem aktuellen Übersetzungsverhältnis des stufenlosen Getriebes verglichen wird. Aus der Differenz wird eine Stellgröße abgeleitet, um das tatsächliche Übersetzungsverhältnis dem Soll-Übersetzungsverhältnis anzugleichen. Auch diese Lösung setzt mehrere Kennfelder voraus, um eine aktuelle Fahrweise zu berücksichtigen.

Bei der Einrichtung nach der DE-A 42 23 967 wird ein Getriebe-Abtriebsmoment im Rahmen einer vorgegebenen Betriebsstrategie eingestellt. Die vorgebbare Betriebsstrategie repräsentiert ein sportliches oder ein verbrauchsgünstiges Fahrverhalten. Durch Verbrauchsmessungen wird ein Kennfeld insbesondere mit Stützstellen ermittelt. Der Soll-Wert der Getriebeübersetzung wird in Abhängigkeit einer Mindestdrehzahl des Motors und eines gewünschten Abtriebsmoments so klein wie möglich gewählt. Die Getriebeübersetzung bleibt im wesentlichen zur 50%igen Betätigung des Fahrpedals auf einem minimalen Wert und steigt erst dann an. Mit dieser Grobeinstellung kann unter Umständen eine individuelle Applikation entfallen.

Aus den internationalen Patentanmeldungen WO 90/04119 und WO 94/24463 sind ferner Steuerungen für stufenlose Getriebe bekanntgeworden, die eine Einschränkung von Fahrbereichen ermöglichen, um die Fahrbarkeit zu verbessern.

Die EP-A 0 574 968 offenbart ein Verfahren zur Steuerung eines Umschlingungs-CVT, bei dem der Fahrbereich über die Auswahl diskreter Begrenzungskennfelder einschränkbar ist. Die Begrenzungskennfelder repräsentieren dabei zulässige Primärdrehzahlbereiche des Variators jeweils für ökonomischen, komfortablen, sportlichen und manuell beeinflußbaren Betrieb des Fahrzeugs. Die Auswahl des für die weitere Sollwert-Vorgabe der Primärdrehzahl gültigen Begrenzungskennfelder erfolgt in Abhängigkeit von Fahrpedalwinkel und gemessener Sekundärwellendrehzahl des Variators. Die Applikation dieses Verfahrens ist bei großem Ressourcenbedarf aufwendig, insbesondere hinsichtlich harmonischer Übergänge beim Wechsel zwischen den diskreten Kennfeldern.

Die US 5,161,433 A beschreibt ein Verfahren zur Einschränkung eines durch eine fahrleistungsorientierte und eine kraftstoffverbrauchsorientierte Motorbetriebskennlinie begrenzten, maximalen Verstellbereichs der Motordrehzahl, der insgesamt für die CVT-Betriebsstrategie nutzbar ist. Berücksichtigt wird hierbei einerseits der betriebspunktabhängige Wunsch nach einer Drehzahländerung, andererseits der ebenfalls betriebspunktabhängige Wunsch nach einer Drehzahlstabilität. Der für die Betriebsstrategie letztlich tatsächlich nutzbare, betriebspunktabhängige Verstellbereich der Motordrehzahl und ein Inkrement zur Korrektur dieses Motordrehzahl-Verstellbereichs werden über feste Formeln berechnet. Die Parameter und Variablen dieser Formeln werden dabei aus zahlreichen Kennlinien, denen fahrsituative Eingangsgrößen zugeordnet sind, ermittelt. Entsprechend aufwendig für dieses Verfahren ist die Applikation und der Ressourcenbedarf seitens der elektronischen Getriebesteuerung.

Der vorliegenden Erfindung liegt die Aufgabe zugrunde, ein Verfahren zur Vorgabe der Übersetzung eines stufenlosen Getriebes zu schaffen, bei dem, unter Berücksichtigung des Anforderungsprofils, der Applikationsaufwand und der Ressourcenbedarf reduziert werden.

Die der Erfindung zugrunde liegende Aufgabe wird dadurch gelöst, daß die aktuelle Betriebspunktvorgabe in einem vorgegebenen Fahrbereich mit einer unteren und einer oberen Grenze unter Verarbeitung aktueller, im wesentlichen fahrerabhängiger Eingangssignale ohne Filterung ständig neu bestimmt wird. Somit wird die Lage des Betriebspunktes ständig neu berechnet und wird vorwiegend von den Aktivitäten eines Fahrers bestimmt. Wesentlich ist ferner, daß diese ständige Neuberechnung unverzögert, d. h. ohne den Einsatz eines Filters, erfolgt.

Ein wesentliches Charakteristikum des erfindungsgemäßen Verfahrens sind somit die ständige Neuberechnung des vorzugebenden Betriebspunktes ohne Verwendung eines Filters und die Orientierung an der oberen und unteren Grenze des geltenden Fahrbereichs. Der Betriebspunkt wird in Abhängigkeit von der aktuellen Fahrsituation und unter Berücksichtigung der Bereichsgrenzen unmittelbar, d. h. ohne Verzögerung durch einen Filter, und durch ständige Neuberechnung vorgegeben. Diese Charakteristik des erfindungsgemäßen Verfahrens läßt sich mit einer freien, begrenzten Vorgabe des Betriebspunktes umschreiben.

Beim erfindungsgemäßen Verfahren erweist es sich als besonders vorteilhaft, wenn die Eingangssignale für die Berechnung der Betriebspunktvorgabe innerhalb der Grenzen im wesentlichen fahrerabhängig sind. Dadurch können die bisher üblichen Schalt- und/oder Filterzeitkennfelder, die den aktuellen Fahrerwunsch in eine Vorgabe des Betriebspunktes umwandeln, entfallen. Der Applikationsaufwand und der Ressourcenbedarf verringert sich, ohne daß die Fahrbarkeit und der Verbrauch leidet.

Weiter erweist es sich sich beim erfindungsgemäßen Verfahren als besonders vorteilhaft, wenn die untere und obere Grenze nicht fest sind, sondern sich in Abhängigkeit von der Fahrzeuggeschwindigkeit verändern und sich zudem an die jeweilige allgemeine Fahrsituation dynamisch anpassen. Es wird ein dynamischer Fahrbereich generiert.

Damit ist es möglich, den aktuellen Fahrerwunsch in den Grenzen der allgemeinen, aktuellen Fahrsituation in eine Betriebspunktvorgabe umzusetzen, wodurch die Fahrbarkeit wesentlich verbessert wird. Der Applikationsaufwand ist gering, da im einfachsten Fall nur eine Größe - ein Beeinflussungsfaktor - abgestimmt werden muß. Der Ressourcenbedarf ist gering, weil sich alle allgemeinen Einflußgrößen auf diese Größe abbilden lassen.

Zu den allgemeinen Größen, die miteinander verknüpft, den Beeinflussungsfaktor ergeben, zählen vor allem: die aktuelle, allgemeine Fahrweise des Fahrers, der aktuelle Fahrwiderstand, die Fahrleistungsmessung, der aktuelle Fahrzeugzustand und ein manueller Fahrereingriff (mit Hilfe eines Wählhebels oder dergleichen).

Vorteilhafte Ausgestaltungen des erfindungsgemäßen Verfahrens sind den Unteransprüchen zu entnehmen.

Weitere, für die Erfindung wesentliche Merkmale sowie die daraus resultierenden Vorteile sind der nachfolgenden Beschreibung mehrerer Ausführungsbeispiele zu entnehmen.

Es zeigen:

Fig. 1     eine schematische Darstellung eines Fahrbereiches eines stufenlosen Getriebes;

Fig. 2     den Fahrbereich nach Fig. 1 mit einer unteren Begrenzung;

Fig. 3     den Fahrbereich nach Fig. 1 mit einer oberen Begrenzung;

Fig. 4     eine Grundstruktur einer Vorrichtung zur Vorgabe des Betriebspunktes;

Fig. 5     eine weitere Grundstruktur einer Vorrichtung zur Vorgabe des Betriebspunktes und

Fig. 6     eine in Anlehnung an die Grundstruktur gemäß Fig. 4 ausgeführte Struktur einer Vorrichtung zur Regelung der Vorgabe des Über-setzungsverhältnisses eines stufenlosen Getriebes und

Fig. 7       ein Diagramm zur Erläuterung einer Fahrleistungskennlinie.

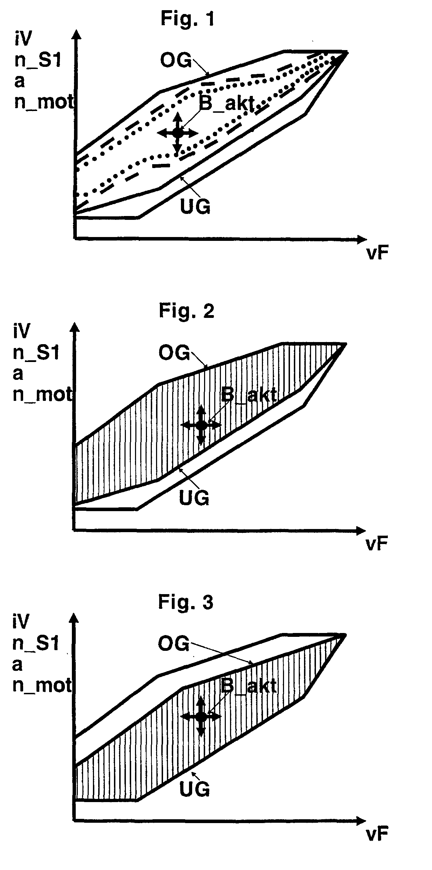

Die schematischen Darstellungen nach den Fig. 1 bis 3 dienen der Erörterung grundlegender Zusammenhänge bei der Vorgabe des Betriebspunktes eines stufenlosen Getriebes. Das stufenlose Getriebe, das ebenso wie ein Motor und ein Fahrzeug selbst nicht abgebildet ist, besteht aus einem Kegelscheibengetriebe. Dieses wird über eine hydraulisch wirkende Stellvorrichtung zur Veränderung eines Übersetzungsverhältnisses iV stufenlos verstellt. Hierbei wird die Primär- bzw. Sekundärscheibe des Kegelscheibengetriebes mit einer Drehzahl $n\_S1$ bzw. $n\_S2$ angetrieben.

In Fig. 1 ist schematisch ein Fahrbereich abgebildet, der durch eine untere Kennlinie UG und eine obere Kennlinie OG begrenzt wird. Die Kennlinien UG und OG werden durch Wertepaare der Übersetzung iV bzw. der Drehzahl der Primärscheibe $n\_S1$ bzw. der Fahrzeugbeschleunigung a und der Fahrzeuggeschwindigkeit vF generiert. Anstelle der erwähnten Parameter können gleichwertige Größen gesetzt werden. Durch den Fahrbereich sind die möglichen Betriebspunktvorgaben gegeben. Eine aktuelle Betriebspunktvorgabe B_akt liegt im vorgegebenen Fahrbereich. Ihre Lage bzw. -veränderung in Vertikalrichtung wird im wesentlichen durch die Betriebsstrategie bestimmt, während das Maß der horizontalen Verschiebung aus der Fahrzeuggeschwindigkeit vF resultiert.

Der eingezeichnete Fahrbereich ist veränderlich. Er kann durch Verschiebung der Kennlinien UG und OG, die die aktuellen Bereichsgrenzen darstellen, variiert werden. Ein eingegrenzter Fahrbereich wird dann durch die gestrichelt eingezeichneten Linien definiert.

Auf diese Weise kann die Kennlinie UG so weit nach oben verschoben werden, bis sie ihre strichpunktiert eingezeichnete Lage angenommen hat. Diese Lage könnte als das "größte Minimum" verstanden werden. Analog hierzu kann die Kennlinie OG maximal so weit nach unten verschoben werden, bis die strichpunktiert eingezeichnete Lage erreicht ist. In diesem Fall ist sozusagen ein "kleinstes Maximum" erreicht. Durch die stufenlose Verschiebung der Bereichsgrenzen wird zu jedem Zeitpunkt ein Fahrbereich vorgegeben, der der allgemeinen Fahrsituation entspricht. Wenn beispielsweise die obere Bereichsgrenze OG im wesentlichen beibehalten und die untere Bereichsgrenze UG angehoben wird, stellt sich eine Konzentration des Fahrbereichs in Richtung einer zu einer höheren Leistung orientierten Vorgabe des Betriebspunktes entsprechend einer leistungsorientierten Fahrweise ein. Die Auswirkungen sind in Fig. 2 schematisch dargestellt; wenn die untere Bereichsgrenze UG beibehalten und die obere Bereichsgrenze OG nach unten verschoben wird, ist das Resultat ein in Richtung ökonomische Fahrweise verlagerter Fahrbereich.

Neben den beiden vorgenannten Varianten besteht auch die Möglichkeit, die untere Bereichsgrenze nach oben und die obere Bereichsgrenze nach unten zu verschieben. Im Ergebnis stellt sich ein Fahrbereich mit einer Charakteristik ein, die zwischen einer leistungsorientierten und einer ökonomischen Fahrweise liegt ("normale" Fahrweise).

In den Grundzügen zeichnet sich die erfindungsgemäße Betriebsstrategie durch zwei Besonderheiten aus: zum einen wird die aktuelle Betriebspunktvorgabe innerhalb des geltenden Fahrbereichs ausschließlich aufgrund der aktuell vorliegenden Situation - im wesentlichen fahrerabhängig - eingestellt (freie begrenzte Betriebspunktvorgabe).

Zum anderen erfolgt die Vorgabe des Betriebspunktes in einem Fahrbereich, dessen Bereichsgrenzen variabel sind (dynamischer Fahrbereich). Durch die parameterabhängige Veränderung der Bereichsgrenzen erfolgt sozusagen eine Führung im großen, weil sich die generelle Vorgabe des aktuellen Betriebspunktes an den Bereichsgrenzen orientiert. Durch die Führung im großen ist es möglich, mit wenig Applikationsaufwand und mit geringem Ressourcenbedarf grundlegende Zusammenhänge (z. B. "mit steigender Fahrzeuggeschwindigkeit steigt auch die Motordrehzahl") nachzubilden. Gleichzeitig kann durch die Führung im großen die allgemeine Fahrbarkeit und die Verbrauchstendenz festgelegt werden.

Die "freie begrenzte Betriebspunktvorgabe" ist auch dadurch gekennzeichnet, daß kein Filter eingesetzt wird, um etwa Übergangsfunktionen vorzugeben oder den Betriebspunkt durch Filterung gemessener oder errechneter Betriebsparameter zu ermitteln. Die freie begrenzte Betriebspunktvorgabe ist, bezogen auf ihre Struktur, ein geregeltes Verfahren mit dynamischer Ausgangsgrößenbegrenzung, bei dem die Ausgangsgröße vorzugsweise normiert und rückgekoppelt wird.

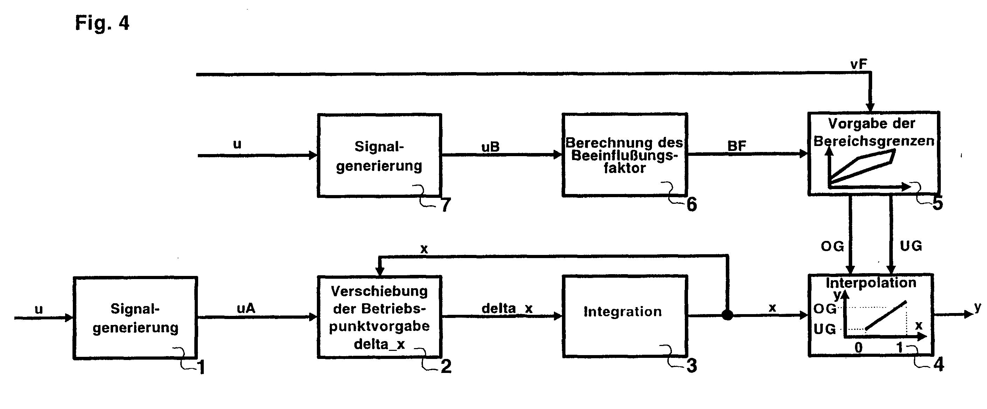

Die vorstehend erläuterte Betriebsstrategie kann durch zumindest zwei Grundstrukturen realisiert werden. In Fig. 4 ist ein Blockschaltbild einer ersten Grundstruktur wiedergegeben, über die die Vorgabe eines aktuellen Betriebspunktes B_akt bezogen auf die jeweiligen Grenzen des Fahrbereiches vorgenommen wird.

An einem Funktionsblock 1 zur Signalgenerierung liegt ein Vielzahl von Eingangssignalen an. Stellvertretend für diese Eingangssignale steht ein Eingangssignal u. Vorzugsweise handelt es sich hierbei um einen Drehzahlwert (Motordrehzahl $n\_Mot$, Drehzahl der Primär- und/oder Sekundärscheibe $n\_S1$ oder $n\_S2$) einer Drosselklappeninformation DKI, einer Fahrzeugbeschleunigung a, eines Übersetzungsverhältnisses iV bzw. eines sonstigen im Rahmen einer Betriebsstrategie verwertbaren Signals.

Das Eingangssignal wird im Funktionsblock 1 zu mindestens einem logischen Ausgangssignal uA umgesetzt. Dieses logische Ausgangssignal kann einer physikalischen Größe, zum Beispiel einem Fahrwiderstand oder einem Leistungswunsch, einer Beschleunigung oder einer subjektiven Größe entsprechen. Das logische Ausgangssignal liegt an einem Funktionsblock 2 als Eingangssignal an. Im Funktionsblock 2 wird aufgrund des logischen Ausgangssignals eine Verschiebung der Betriebspunktvorgabe $\Delta x$ laufend ermittelt. Bei diesem $\Delta x$ kann es sich um einen $\triangle$-Interpolationsfaktor handeln, der beispielsweise die prozentuale Veränderung der Betriebspunktvorgabe - bezogen auf die aktuelle obere und untere Grenze OG, UG - vorgibt. Diese Verschiebung wird in einer nachfolgenden Integrationsstufe 3 zu einem Wert x aufintegriert, der die Betriebspunktvorgabe - bezogen auf OG, UG - ist. Der Wert x wird auf den Funktionsblock 2 zurückgekoppelt. In der nachfolgenden Rechenstufe 4 wird zu dem Wert x durch Interpolation in den UG-/OG-Grenzen des aktuellen Fahrbereichs und zwischen den Werten x0 und x1 eine Stellgröße y errechnet, die als Ausgangssignal, beispielsweise einem selbst nicht dargestellten Drehzahlregler für die Motordrehzahl bzw. einem hydraulischen Stellglied für die Übersetzungsregelung oder dergleichen, zugeführt wird (und die eigentliche Betriebspunktvorgabe ist). Die UG-/OG-Grenzen liegen als Eingangssignale an der Rechenstufe 4 an und werden von einem Funktionsblock 5 ausgegeben, in dem der geltende Fahrbereich generiert wird.

Die Berechnung der Stellgröße y erfolgt nach der Formel:

$$y = \frac{OG - UG}{x1 - x0} \cdot (x - x0) + UG$$

Mit

x1 = 1 und x0 = 0 errechnet sich y zu
y = UG + x (OG - UG).

Die aktuellen Größen UG und OG werden in einem Funktionsblock 5 ermittelt. Dieser verfügt insbesondere über Informationen über die größte obere und die kleinste untere Grenzen. Hierbei kann es sich um jeweils eine Kennlinie über die Fahrgeschwindigkeit handeln. Zusammen mit Eingangssignalen, die vom Funktionblock 6 generiert werden, und anderen Eingangssignalen, wie beispielsweise der Fahrgeschwindigkeit vF, ermittelt der Funktionsblock die aktuellen untere und obere Grenze. Die am Funktionblock 5 anliegenden und vom Funktionsblock 6 stammenden Eingangssignale sind unter der Bezeichnung BF zusammmengefaßt. BF setzt sich wiederum aus einem Beeinflußungsfaktor für die obere Grenze OG und einem Beeinflußungsfaktor für die untere Grenze UG zusammen.

Am Funktionsblock 6 liegt eine Vielzahl von Eingangssignalen an. Stellvertretend für diese Eingangsignale steht ein Eingangssignal uB, bei dem es sich um ein Informationssignal zum Fahrwiderstand, die aktuelle allgemeine Fahrweise, den aktuellen allgemeinen Fahrzeugzustand, einen manuellen Fahrereingriff bzw. um ein sonstiges Informationssignal handelt, das im Rahmen einer Betriebsstrategie verwertbar ist.

Der Funktionsblock 7 generiert aus einer Vielzahl von Eingangssignalen u die Ausgangssignale uB. Vorzugsweise handelt es sich hierbei um einen Drehzahlwert (Motordrehzahl n_Mot, Drehzahl der Primärund/oder Sekundärscheibe n_S1 oder n_S2) einer Drosselklappeninformation DKI, einer Fahrzeugbeschleunigung a, eines Übersetzungsverhältnisses iV bzw. eines sonstigen im Rahmen einer Betriebsstrategie verwertbaren Signals.

Möglich ist eine Zusammenfassung der Funktionsblöcke 1 und 7. Der gemeinsame Funktionblock generiert dann die Signale uA und uB, die an den Funktionsblöcken 2 und 6 anliegen.

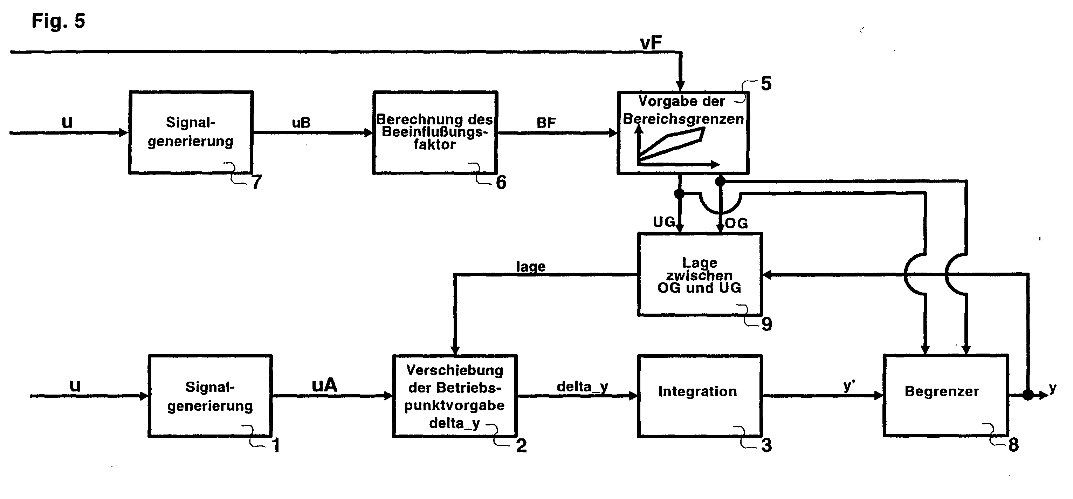

Die zweite der möglichen Grundstrukturen ist in Fig. 5 schematisch abgebildet.

Diese Grundstruktur stimmt hinsichtlich der Signalgenerierung und der Ermittlung der Grenzen UG und OG mit derjenigen nach Fig. 4 überein. Das logische Ausgangssignal uA des Funktionsblocks 1 liegt am Funktionsblock 2 an, über den eine Verschiebung der Betriebspunktvorgabe $\triangle y$ als Ausgangsignal errechnet wird. Hier kann es sich um die Veränderung eines Soll-Übersetzungsverhältnisses $\triangle$_iV_soll bzw. die Veränderung einer Beschleunigung $\triangle$_a_soll usw. handeln. Diese Verschiebung wird in der nachfolgenden Integrationsstufe 3 zur Betriebspunktvorgabe y' (bzw. y bei nachfolgender Begrenzung) aufsummiert. Im Funktionsblock 9 wird die Lage der Betriebspunktvorgabe in den Grenzen UG und OG des Fahrbereiches bestimmt. Die Position zwischen diesen Grenzen UG, OG wird dem Funktionsblock 2 rückgemeldet.

Während bei der Grundstruktur nach Fig. 4 die Vorgabe des Betriebspunktes indirekt durch Interpolation zwischen den Grenzen UG und OG des Fahrbereiches erfolgt, wird bei der Grundstruktur nach Fig. 5 der Betriebspunkt direkt vorgegeben.

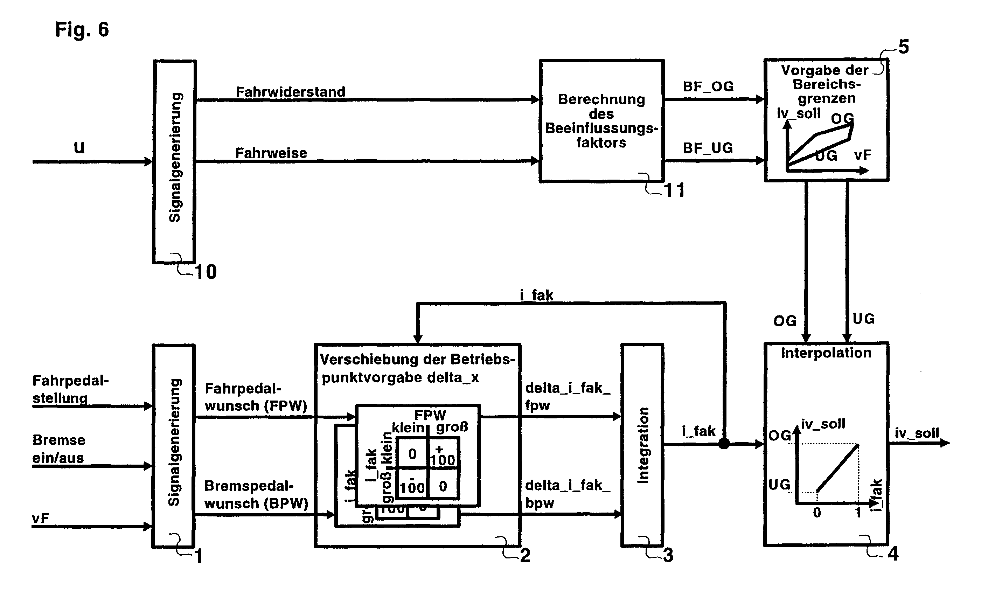

Bei der Struktur einer ausgeführten Betriebsstrategie zur Vorgabe des Übersetzungsverhältnisses eines stufenlosen Getriebes (Fig. 6) liegen am Funktionsblock 1 zur Signalgenerierung mehrere Eingangssignale an. Diese werden von verschiedenen Sensoren oder auch anderen Steuereinrichtungen geliefert. Im einzelnen handelt es sich insbesondere um die Fahrpedal- bzw. Drosselklappenstellung, ein Bremssignal und die Fahrzeuggeschwindigkeit.

Diese Eingangssignale werden zu logischen Ausgangssignalen verarbeitet, die einem Leistungswunsch, einem Verzögerungswunsch und einem Bremswunsch entsprechen. Diese Signale liegen am Funktionsblock 2 an. Mit Hilfe von Fuzzy-Regelwerken, die im Funktionsblock 2 implementiert sind, werden Teil-Interpolationsfaktoren $\triangle$_i_fak gewonnen. Die Ausgangssignale $\triangle$i_fak_fpw, $\triangle$_i_fak_bpw bedeuten vorzugsweise ein Maß für eine gewünschte Veränderung der Lage der Betriebspunktvorgabe -bezogen auf die aktuelle obere und untere Grenze OG, UG- als Reaktion auf den aktuellen Leistungswunsch, den aktuellen Verzögerungswunsches und den aktuellen Bremswunsch. Dieses Maß kann z. B. eine Prozentangabe sein, wobei 100% dem Abstand zwischen den aktuellen Grenzen UG und OG entspricht. Es ist besonders vorteilhaft, die Größen delta_i_fak_fpw und delta_i_fak_bpw mit Applikationsparametern zu multiplizieren (nicht dargestellt). Hierdurch wird die Applikation wesentlich vereinfacht, da bei der Applikation nur noch diese Multiplikationsfaktoren, nicht jedoch die Fuzzy-Regelwerke selbst abgestimmt werden müssen.

Statt der Fuzzy-Regelwerke können auch modellbasiere Algorithmen verwendet werden.

Im Funktionsblock 3 erfolgt die Integration dieser Werte zu einem Interpolationsfaktor i_fak. Dieser wird zum Funktionsblock 2 zurückgekoppelt und liegt ferner am Funktionsblock 4 an. Am Funktionsblock 4 liegen noch die Grenzen UG,OG des geltenden Fahrbereiches an, die im Funktionsblock 5 festgelegt werden. Da hier das Übersetzungsverhältnis iV vorgegeben wird, sind dies die Grenzen iV_min und iV_max.

Bei der Festlegung des aktuellen Fahrbereichs durch den Funktionsblock 5 wird wie folgt vorgegangen:

An einem Funktionsblock 10, der ebenfalls der Signalgenerierung dient, liegen Eingangssignale u an. Die Eingangssignale werden in logische Ausgangssignale umgesetzt, die den Fahrwiderstand oder die Fahrweise repräsentieren. In einem Funktionsblock 11 werden diese logischen Ausgangssignale zu vorzugsweise zwei Beeinflussungsfaktoren BF_OG und BF_UG für die Bereichsgrenzen OG, UG miteinander verknüpft. Durch die Beeinflussungsfaktoren erfolgt eine Verlagerung der Bereichsgrenzen, wie eingangs im Zusammenhang mit Fig. 1 erläutert.

Das erfindungsgemäße Verfahren ist nicht auf den Einsatz in Verbindung mit einem stufenlosen Getriebe beschränkt. Es kann in analoger Weise bei einem gestuften Automatikgetriebe mit z. B. fünf Gängen eingesetzt werden. Es kann sich in diesem Zusammenhang als zweckmäßig erweisen, eine zusätzliche Hysteresestufe vorzusehen, um Hysteresebereiche zwischen den einzelnen Gangstufen darzustellen. Durch diese Hysteresestufe erhält man das bei einem Stufenautomaten gewohnte Schaltverhalten. Insbesondere verhindert diese Hysteresestufe unerwünschte Pendelschaltungen.

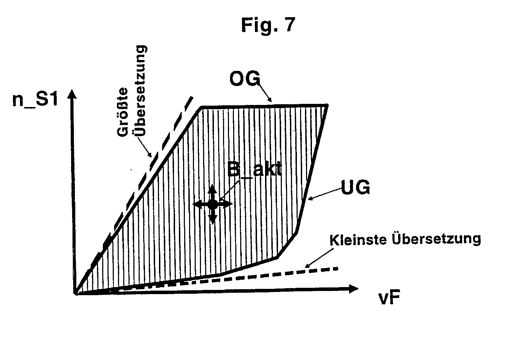

Aus dem Diagramm nach Fig. 7 ist der Verlauf einer oberen Kennlinie für eine maximale Fahrleistung, die Fahrleistungskennlinie FL, ersichtlich. Diese Kennlinie wird beispielhaft durch Wertepaare der Drehzahl der Primärscheiben n_S1 und der Fahrzeuggeschwindigkeit vF generiert. Anstelle der erwähnten Parameter können auch gleichwertige Größen, wie beispielsweise die Übersetzung iV, anstelle von n_S1 verwendet werden.

Die Festlegung der Fahrleistungskennlinie FL als obere Kennlinie OG ist im allgemeinen von mehreren Bedingungen abhängig, beispielsweise,

a) daß die Fahrzeuggeschwindigkeit kleiner als ein bestimmter Wert - beispielsweise 7 km/h - ist und daß gleichzeitig
b) das Fahrpedal in Richtung Kick-down betätigt ist (KD-Flag = 1).

Das Streichen der Fahrleistungskennlinie FL als obere Kennlinie OG ist ebenfalls in der Regel von mehreren Bedingungen abhängig. Im einfachsten Fall ist dies die Bedingung, daß das Fahrpedal von der Richtung Kick-down wegbetätigt wird (KD-Flag = 0).

Zur Beeinflussung des dynamischen Fahrbereichs sind weitere Abwandlungen möglich. Zu Einrichtungen, die vielfältige Informationen bereitstellen, zählen beispielsweise Nachrichtensysteme zur Verbreitung aktueller Verkehrsnachrichten, Verkehrsleit- und Informationssysteme und Systeme, mit denen Einfluß auf die Fahrmanöver genommen werden. Hierzu zählen auch Steuersysteme mit adaptivem Charakter zur Steuerung eines Pkw-Automatikgetriebes. Daten zur Positionsbestimmung können unmittelbar dazu verwendet werden, die Steuerung eines automatischen Getriebes den geographischen bzw. länderspezifischen Gegebenheiten anzupassen. In diesem Sinne kann ein System zur Positionsbestimmung als zusätzlicher Sensor für Eingangssignale aufgefaßt werden. Aktuelle Daten, beispielsweise zur Positionsbestimmung, können mit mitgeführten Daten, beispielsweise digitalisierten Straßenkarten, und vom Fahrer-Fahrzeug-System abgeleitete Daten, wie beispielsweise Querbeschleunigungswerte und Raddrehzahldifferenzen, miteinander verknüpft werden. Aus dieser Verknüpfung läßt sich eine Information zur Kurvenerkennung gewinnen, die dem Fahrer das Führen eines Kraftfahrzeugs erleichtert.

Bezugszeichen

| 1 | Funktionsblock |
| 2 | Funktionsblock |
| 3 | Integrationsstufe |
| 4 | Rechenstufe |
| 5 | Funktionsblock |
| 6 | Funktionsblock |
| 7 | Funktionsblock |
| 8 | Funktionsblock |
| 9 | Funktionsblock |
| 10 | Funktionsblock |
| 11 | Funktionsblock |

**Patentansprüche**

1. Verfahren zur Vorgabe der Übersetzung eines stufenlosen Getriebes mit Mitteln (1, 9) zum Erfassen von Eingangssignalen, die von einem Fahrer-Fahrzeugsystem abgeleitet sind und die mindestens zu einem Ausgangssignal verarbeitet werden, durch das im Rahmen einer Betriebsstrategie eine Vorgabe des Übersetzungsverhältnisses und/oder eine Vorgabe der Drehzahl eines Antriebsmotors und/oder eine Vorgabe der Fahrzeugbeschleunigung in einem vorgegebenen Fahrbereich mit einer unteren und einer oberen Grenze verändert wird, dadurch **gekennzeichnet**, daß die Betriebspunktvorgabe (B_akt) in dem vorgegebenen Fahrbereich innerhalb der unteren und der oberen Grenze (UG, OG) unter Verarbeitung aktueller, im wesentlichen fahrerabhängiger Eingangssignale ohne Filterung ständig neu bestimmt wird.

2. Verfahren nach Anspruch 1, dadurch **gekennzeichnet**, daß - im wesentlichen abhängig von der aktuellen Fahrsituation - die untere und obere Grenze (UG, OG) des Fahrbereichs variabel sind, so daß ein dynamischer Fahrbereich generiert wird, und daß sich die Betriebspunktvorgabe (B_akt) im dynamischen Fahrbereich an der unteren und oberen Grenze (UG, OG) orientiert.

3. Verfahren nach den Ansprüchen 1 oder 2, dadurch **gekennzeichnet**, daß mindestens ein Eingangssignal (u) in mindestens ein logisches Ausgangssignal (uA) umgesetzt wird, daß aus diesem Ausgangssignal eine Verschiebung der Betriebspunktvorgabe (delta_x, delta_y) errechnet wird, diese nachfolgend zu einer Größe (x, y) integriert wird, die durch Interpolation unter Berücksichtigung der Bereichsgrenzen (UG, OG) zu einer Stellgröße (y, y') errechnet wird.

4. Verfahren nach Anspruch 3, dadurch **gekennzeichnet**, daß mehrere logische Ausgangssignale (uA) zu Teil-Interpolationsfaktoren (Δ_i_fak) verarbeitet werden, diese zu einem Interpolationsfaktor (i_fak) zusammengefaßt werden und unter Berücksichtigung der Bereichsgrenzen (UG, OG) durch Interpolation zu einem Ausgangssignal (iV_soll) verarbeitet werden.

5. Verfahren nach den Ansprüchen 3 oder 4, dadurch **gekennzeichnet**, daß durch das Ausgangssignal die Übersetzung und/oder die Motordrehzahl (n_Mot) und/oder die Drehzahl der Primärscheibe (n_S1) des stufenlosen Getriebes vorgegeben wird.

6. Verfahren nach den Ansprüchen 3 oder 4, dadurch **gekennzeichnet**, daß durch das Ausgangsignal die Beschleunigung (a) vorgegeben wird.

7. Verfahren nach Anspruch 4, dadurch **gekennzeichnet**, daß die Ausgangssignale (uA) über Regelwerke, insbesondere solche der Fuzzy-Logik, zu Teil-Interpolationsfaktoren (Δ_i_fak) umgesetzt werden.

8. Verfahren nach Anspruch 3, dadurch **gekennzeichnet**, daß die Ausgagssignale (uA) über Regelwerke, insbesondere solcher der Fuzzy-Logik, zu Verschiebungen der Betriebspunktvorgabe (delta_y) umgesetzt werden.

9. Verfahren nach Anspruch 2, dadurch **gekennzeichnet**, daß Eingangssignale (u) zu logischen Ausgangssignalen (uA) mindestens für den Fahrwiderstand und die Fahrweise eines Fahrers umgesetzt und zu einem Beeinflussungsfaktor verknüpft werden, über den die Bereichsgrenzen (UG, OG) des Fahrbereichs variiert werden.

10. Verfahren nach Anspruch 3, dadurch **gekennzeichnet**, daß die Größe (x) an den Funktionsblock rückgekoppelt wird.

11. Verfahren nach Anspruch 3, dadurch **gekennzeichnet**, daß die Position der Größe (y) zwischen den Bereichsgrenzen (UG, OG) an den Funktionsblock (2) rückgekoppelt wird.

12. Verfahren nach Anspruch 9, dadurch **gekennzeichnet**, daß der Beeinflussungsfaktor (BF) durch einen manuellen Fahrereingriff veränderlich ist.

13. Verfahren nach Anspruch 12, dadurch **gekennzeichnet**, daß der Beeinflussungsfaktor (BF) durch die Fahrzeugtemperatur veränderlich ist.

14. Verfahren nach Anspruch 1 oder 2, dadurch **gekennzeichnet**, daß eine Fahrleistungskennlinie (FL) als obere Kennlinie (OG) festgelegt werden kann, wenn maximale Motorleistung gefordert werden kann.

15. Verfahren nach Anspruch 14, dadurch **gekennzeichnet**, daß die Festlegung der Fahrleistungskennlininie (FL) als obere Kennlinie (OG) von mehreren Bedingungen abhängig ist.

16. Verfahren nach Anspruch 14, dadurch **gekennzeichnet**, daß das Streichen der Fahrleistungskennlinie (FL) als obere Kennlinie (OG) von mehreren Bedingungen abhängig ist.

## Claims

1. Method for presetting the transmission ratio of a continuously variable transmission with means (1, 9) for detecting input signals which are derived from a driver-vehicle system and which are processed to form at least one output signal, via which a presetting of the transmission ratio and/or a presetting of the speed of a drive engine and/or a presetting of the vehicle acceleration is/are varied in a preset driving range with a lower and an upper limit in line with an operating strategy, characterised in that the operating point presetting (B_akt) in the preset driving range is constantly re-determined within the lower and the upper limit (UG, OG) while processing actual input signals, which are substantially driver-dependent, without filtering.

2. Method according to Claim 1, characterised in that - substantially dependent on the actual driving situation - the lower and the upper limit (UG, OG) of the driving range are variable, so that a dynamic driving range is generated, and that the operating point presetting (B_akt) in the dynamic driving range is geared to the lower and the upper limit (UG, OG).

3. Method according to Claim 1 or 2, characterised in that at least one input signal (u) is converted into at least one logic output signal (uA), that a displacement of the operating point presetting (delta_x, delta_y) is calculated from this output signal, this displacement is then integrated to form a variable (x, y), which is calculated by interpolation to form a control variable (y, y'), taking account of the range limits (UG, OG).

4. Method according to Claim 3, characterised in that a plurality of logic output signals (uA) are processed to form partial interpolation factors ($\triangle$_i_fak), these are combined to form an interpolation factor (i_fak) and processed by interpolation to form an output signal (iV_soll), taking account of the range limits (UG, OG).

5. Method according to Claim 3 or 4, characterised in that the transmission ratio and/or the engine speed (n_Mot) and/or the speed of the primary pulley (n_S1) of the continuously variable transmission is/are preset by the output signal.

6. Method according to Claim 3 or 4, characterised in that the acceleration (a) is preset by the output signal.

7. Method according to Claim 4, characterised in that the output signals (uA) are converted into partial interpolation factors ($\triangle$_i_fak) via regulating units, in particular those of fuzzy logic.

8. Method according to Claim 3, characterised in that the output signals (uA) are converted into displacements of the operating point presetting (delta_y) via regulating units, in particular those of fuzzy logic.

9. Method according to Claim 2, characterised in that input signals (u) are converted into logic output signals (uA), at least for the travelling resistance and the driving technique of a driver, and combined to form an influencing factor, via which the range limits (UG, OG) of the driving range are varied.

10. Method according to Claim 3, characterised in that the variable (x) is fed back to the functional block.

11. Method according to Claim 3, characterised in that the position of the variable (y) between the range limits (UG, OG) is fed back to the functional block (2).

12. Method according to Claim 9, characterised in that the influencing factor (BF) can be varied through manual driver intervention.

13. Method according to Claim 12, characterised in that the influencing factor (BF) can be varied through the vehicle temperature.

14. Method according to Claim 1 or 2, characterised in that a driving performance characteristic (FL) can be determined as upper characteristic (OG) if maximum engine output can be demanded.

15. Method according to Claim 14, characterised in that the determination of the driving performance characteristic (FL) as upper characteristic (OG) is dependent on a plurality of conditions.

16. Method according to Claim 14, characterised in that the cancellation of the driving performance characteristic (FL) as upper characteristic (OG) is dependent on a plurality of conditions.

## Revendications

1. Procédé pour prédéterminer le rapport de transmission d'une transmission à variation continue équipée de moyens (1, 9) destinés à détecter des signaux d'entrée qui sont dérivés d'un système conducteur-véhicule et qui sont convertis en au moins un signal de sortie par lequel, dans le cadre d'une stratégie de fonctionnement, une prédétermination du rapport de transmission et/ou une prédétermination de la vitesse de rotation d'un moteur d'entraînement et/ou une prédétermination de l'accélération du véhicule sont modifiées dans un rayon d'action prédéterminé qui possède une limite inférieure et une limite supérieure, **caractérisé** en ce que la prédétermination du point de fonctionnement (B_akt) est continuellement redéfinie dans le rayon d'action prédéterminé entre la limite inférieure et la limite supérieure (UG, OG), avec un traitement de signaux d'entrée actuels sensiblement en fonction du conducteur, sans filtration.

2. Procédé selon la revendication 1, **caractérisé** en ce que la limite inférieure et la limite supérieure (UG, OG) du rayon d'action peuvent être modifiées sensiblement en fonction de la situation de marche actuelle, de sorte qu'on obtient un rayon d'action dynamique et que la prédétermination du point de fonctionnement (B_akt) à l'intérieur du rayon d'action dynamique s'oriente au niveau de la limite inférieure et au niveau de la limite supérieure (UG, OG).

3. Procédé selon les revendications 1 ou 2, **caractérisé** en ce que au moins un signal d'entrée (u) est converti en au moins un signal de sortie logique (uA), en ce que, à partir de ce signal de sortie, on calcule un décalage de la prédétermination du point de fonctionnement (delta_x, delta_y), cette prédétermination étant ensuite intégrée pour donner une grandeur (x, y) qui est calculée par interpolation avec prise en compte des limites (UG, OG) d'action pour donner une grandeur de réglage (y, y').

4. Procédé selon la revendication 3, **caractérisé** en ce que plusieurs signaux de sortie logique (uA) sont traités pour donner des facteurs d'interpolation partiels (△_i_fak), ces facteurs étant réunis en un facteur d'interpolation (i_fak) et traités par interpolation avec prise en compte des limites d'action (UG, OG) pour donner un signal de sortie (iV_soll).

5. Procédé selon les revendications 3 ou 4, **caractérisé** en ce que le signal de sortie prédétermine le rapport de transmission et/ou la vitesse de rotation du moteur (n_Mot) et/ou la vitesse de rotation de la poulie primaire (n_S1) de la transmission à variation continue.

6. Procédé selon les revendications 3 ou 4, **caractérisé** en ce que le signal de sortie prédétermine l'accélération (a).

7. Procédé selon la revendication 4, **caractérisé** en ce que les signaux de sortie (uA) sont convertis en facteurs d'interpolation partiels (△_i_fak) au moyen de régulateurs, en particulier tels que à logique floue.

8. Procédé selon la revendication 3, **caractérisé** en ce que les signaux de sortie (uA) sont convertis en des décalages de la prédétermination du point de fonctionnement (delta_y) au moyen de régulateurs, en particulier, tels que à logique floue.

9. Procédé selon la revendication 2, **caractérisé** en ce que des signaux d'entrée (u) sont convertis en des signaux de sortie logiques (uA), au moins pour la résistance de marche et le mode de conduite d'un conducteur, et combinés pour constituer un facteur d'influence au moyen duquel les limites d'action (UG, OG) sont modifiées.

10. Procédé selon la revendication 3, **caractérisé** en ce que la grandeur (x) est transmise en réaction au bloc logique.

11. Procédé selon la revendication 3, **caractérisé** en ce que la position de la grandeur (y) entre les limites d'action (UG, OG) est transmise en réaction au bloc logique (2).

12. Procédé selon la revendication 9, **caractérisé** en ce que le facteur d'influence (BF) peut être modifié par une intervention manuelle du conducteur.

13. Procédé selon la revendication 12, **caractérisé** en ce que le facteur d'influence (BF) peut être modifié par la température du véhicule.

14. Procédé selon la revendication 1 ou 2, **caractérisé** en ce qu'une caractéristique de puissance de conduite (FL) peut être prise comme caractéristique supérieure (OG) lorsque la puissance maximale du moteur peut être demandée.

15. Procédé selon la revendication 14, **caractérisé** en ce que la détermination de la caractéristique de puissance de marche (FL) comme caractéristique supérieure (OG) dépend de plusieurs conditions.

16. Procédé selon la revendication 14, **caractérisé** en ce que l'annulation de la caractéristique de puissance de marche (FL) comme caractéristique supérieure (OG) dépend de plusieurs conditions.

**Fig. 1**

iV
n_S1
a
n_mot

OG

B_akt

UG

vF

**Fig. 2**

iV
n_S1
a
n_mot

OG

B_akt

UG

vF

**Fig. 3**

iV
n_S1
a
n_mot

OG

B_akt

UG

vF

Fig. 4

Fig. 5

EP 0 870 134 B1

**Fig. 6**

Fig. 7